# FASCICULE DE BREVET EUROPEEN

(11) **EP 4 010 248 B1**
(45) Date de publication et mention de la délivrance du brevet: **03.05.2023**
(21) Numéro de dépôt: 20746213.6
(22) Date de dépôt: 28.07.2020
(51) Int. Cl.: B64D 11/06, B64D 11/00

(54) **DISPOSITIF DE FERMETURE AMOVIBLE MOTORISE D'UN ESPACE, NOTAMMENT A L'INTÉRIEUR D'UN AVION**
LÖSBARE MOTORISIERTE VORRICHTUNG ZUM VERSCHLIESSEN EINES RAUMS, INSBESONDERE IN EINEM FLUGZEUG
DETACHABLE MOTORISED DEVICE FOR CLOSING A SPACE, IN PARTICULAR INSIDE AN AEROPLANE

(30) Priorité: 05.08.2019 FR 1908963
(43) Date de publication de la demande: 15.06.2022
(73) Titulaire: Safran Seats, 78370 Plaisir (FR)
(72) Inventeur: BONNEFOY, Bastien, 77550 MOISSY-CRAMAYEL (FR); LIGONNIERE, Laurent, 77550 MOISSY-CRAMAYEL (FR); DE MORAIS, José Bernardo, 77550 MOISSY-CRAMAYEL (FR)
(74) Mandataire: Marconnet, Sébastien
(86) Numéro de dépôt international: PCT/EP2020/071267
(87) Numéro de publication internationale: WO 2021/023581

(56) Documents cités:
- WO-A1-2015/153923
- FR-A1- 2 697 558
- RU-U1- 190 181
- US-A1- 2012 012 704
- US-A1- 2012 112 505
- US-A1- 2017 283 064

## Description

La présente invention porte sur un dispositif de fermeture amovible motorisé d'un espace, notamment à l'intérieur d'un avion. Un dispositif de l'art antérieur est connu du document US2012/0112505 A1.

L'invention vise également à proposer un agencement de sièges qui assure à la fois le confort et la sécurité des passagers, tout en prévoyant de préserver leur intimité. L'invention trouve ainsi une application particulièrement avantageuse avec les sièges d'avion.

Les sièges d'avion de type "Classe Affaires" offrent aux passagers différentes positions de confort, d'une position "assise" jusqu'à une position "couchette", dans laquelle le siège définit un plan de couchage sensiblement horizontal pour que le passager puisse s'allonger.

Des positions intermédiaires de confort sont aussi proposées, telles que la position "relax" dans laquelle le dossier est fortement incliné. Généralement, ces positions intermédiaires sont obtenues par l'inclinaison du dossier pivotant autour d'un axe horizontal. Le passager peut alors rester sur le siège lors de transitions entre les différentes positions.

L'invention vise à améliorer l'intimité d'un passager en lui permettant de s'isoler par rapport à son voisin immédiat ou un couloir central de l'avion.

A cet effet, l'invention a pour objet un dispositif selon la revendication 1.

L'invention permet ainsi, grâce à l'intégration du dispositif de fermeture amovible, de pouvoir aisément s'isoler par rapport à un passager voisin et/ou des personnes passant dans un couloir de circulation. L'invention présente également l'avantage d'être aisément intégrable dans la cabine d'avion et de pouvoir être facilement dégagée du passage d'accès au couloir en cas d'accident du fait du caractère flexible du rideau.

Selon une réalisation, le dispositif de guidage comporte une vis sans fin apte à être entraînée par l'actionneur à moteur électrique.

Selon une réalisation, la vis sans fin coopère via une liaison hélicoïdale avec un dispositif de liaison solidaire de l'ensemble à rideau, de sorte qu'une rotation de la vis sans fin entraîne un déplacement en translation du rideau flexible suivant la direction de déplacement.

Selon une réalisation, l'actionneur à moteur électrique comporte au moins une sortie d'arbre reliée mécaniquement à un dispositif de renvoi d'angle connecté à la vis sans fin.

Selon une réalisation, l'actionneur à moteur électrique comporte deux sorties d'arbre, chaque sortie d'arbre étant reliée mécaniquement à un dispositif de renvoi d'angle connecté à une vis sans fin.

Selon une réalisation, une sortie d'arbre de l'actionneur à moteur électrique est reliée mécaniquement au dispositif de renvoi d'angle par l'intermédiaire d'une liaison à au moins un degré de liberté en rotation, telle qu'une liaison rotule ou une liaison de type joint de cardan.

Selon une réalisation, le montant délimite un logement dans lequel est disposée au moins en partie, de préférence complètement, la vis sans fin.

Selon une réalisation, le bâti est muni d'un premier montant et d'un deuxième montant reliés entre eux par un caisson.

Selon une réalisation, le rouleau est disposé au moins en partie à l'intérieur du caisson.

Selon une réalisation, l'actionneur à moteur électrique est disposé à l'intérieur du caisson.

Selon une réalisation, l'ensemble à rideau comporte une barre transversale rigide fixée à une extrémité du rideau flexible.

Selon une réalisation, une extrémité de la barre transversale est apte à coulisser à l'intérieur d'une rainure ménagée dans le montant.

L'invention a également pour objet un agencement de sièges d'avion comportant:
- un siège avant associé à une coque avant et un siège arrière associé à une coque arrière, et
- un dispositif de fermeture amovible tel que précédemment défini disposé entre le siège avant et le siège arrière.

Selon une réalisation, le dispositif de fermeture amovible comporte un bâti ayant un premier montant muni d'une interface de fixation pour assurer une fixation entre le premier montant et la coque avant du siège avant et un deuxième montant muni d'une interface de fixation pour assurer une fixation entre le deuxième montant et la coque arrière du siège arrière.

L'invention concerne en outre un avion comportant un agencement de sièges tel que précédemment défini.

Bien entendu les différentes caractéristiques, variantes et/ou formes de réalisation de la présente invention peuvent être associées les unes avec les autres selon diverses combinaisons dans la mesure où elles ne sont pas incompatibles ou exclusives les unes des autres.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une vue en perspective d'un dispositif de fermeture amovible d'un espace selon la présente invention;
[Fig. 2] La figure 2 est une vue en perspective du dispositif de fermeture de la figure 1 sans les montants ni le caisson de façon à faire apparaître le dispositif de guidage en translation du rideau;
[Fig. 3a] [Fig. 3b] [Fig. 3c] Les figures 3a, 3b, 3c sont des vues de face d'un dispositif de fermeture amovible selon l'invention respectivement en position stockée, dans une position intermédiaire, et dans une position déployée;
[Fig. 4] La figure 4 est une vue en perspective de la partie basse du dispositif de fermeture amovible selon l'invention montrant l'actionneur à moteur électrique;
[Fig. 5] La figure 5 est une vue en perspective de la partie haute du dispositif de fermeture amovible selon l'invention montrant le dispositif de liaison au rideau coopérant avec une vis sans fin;
[Fig. 6a] [Fig. 6b] Les figures 6a et 6b sont respectivement des vues en perspective et de dessus illustrant l'intégration d'un dispositif de fermeture amovible selon l'invention dans un agencement de sièges d'avion.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

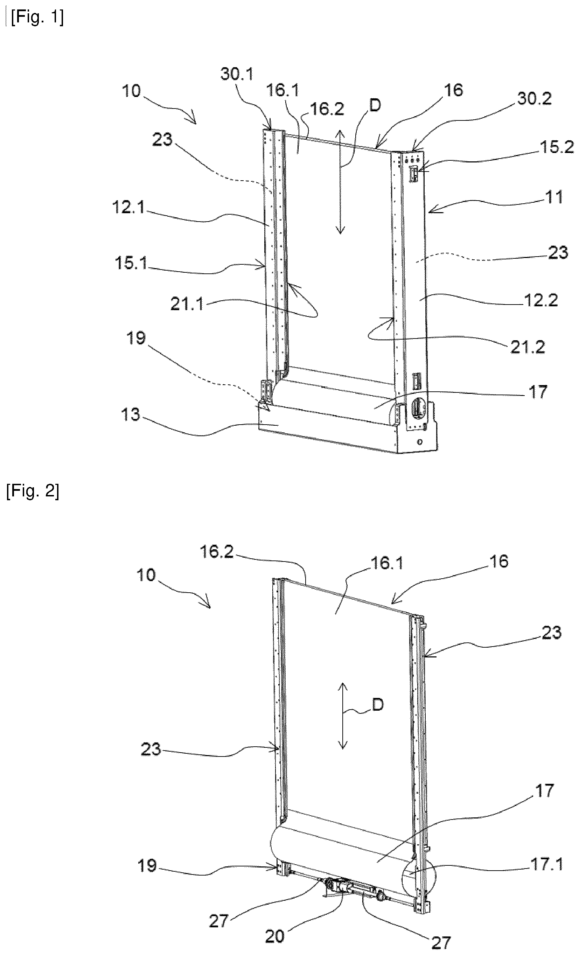

Les termes relatifs du type "horizontal" ou "vertical" sont entendus par référence à un dispositif de fermeture amovible selon l'invention en position d'utilisation, ce qui correspond aux orientations des figures 1, 2, 6a et 6b notamment.

Les figures 1 et 2 montrent un dispositif de fermeture amovible 10 d'un espace à l'intérieur d'un avion. L'espace à obturer pourra être un espace séparant deux sièges adjacents ou un espace séparant un siège par rapport à un couloir de circulation.

Le dispositif 10 comporte un bâti 11 comprenant un premier montant 12.1 et un deuxième montant 12.2 reliés entre eux par un caisson 13 creux. Les montants 12.1, 12.2 sont orientés verticalement, tandis que le caisson 13 est disposé horizontalement, de sorte que le bâti 11 présente globalement une forme de U.

Le bâti 11 comporte au moins une interface de fixation 15.1, 15.2 avec un élément structurel, tel qu'une coque de siège ou tout autre élément structurel situé à l'intérieur d'une cabine d'avion. En l'occurrence, le premier montant 12.1 comporte une interface de fixation 15.1 avec une coque d'un premier siège et le deuxième montant 12.2 comporte une interface de fixation 15.2 avec une coque d'un deuxième siège.

Un ensemble à rideau 16 comporte un rideau flexible 16.1 apte à s'enrouler autour d'un rouleau 17. A cette fin, le rouleau 17 comporte un axe 17.1 monté rotatif par rapport au bâti 11. En outre, une barre transversale 16.2 rigide est fixée à une extrémité du rideau flexible 16.1. Ainsi l'ensemble à rideau 16 est formé par le rideau 16.1 ainsi que la barre transversale 16.2.

Le rideau flexible 16.1 est de préférence réalisé en tissu. Le rideau 16.1 pourra également être réalisé au moins en partie en alcantara ou en cuir pour augmenter la qualité perçue de l'ensemble. Le rideau 16.1 pourra être réalisé au moins en partie en matériau à absorption acoustique.

La barre transversale 16.2 est de préférence réalisée dans un matériau métallique, notamment en aluminium. En variante, la barre transversale 16.2 pourra être réalisée en plastique ou dans un matériau composite ou tout autre matériau rigide envisageable.

Le rouleau 17 est disposé au moins en partie à l'intérieur du caisson 13. Un capot (non représenté) pourra être fixé sur le caisson 13 pour cacher une partie du rouleau 17 qui dépasse du caisson 13.

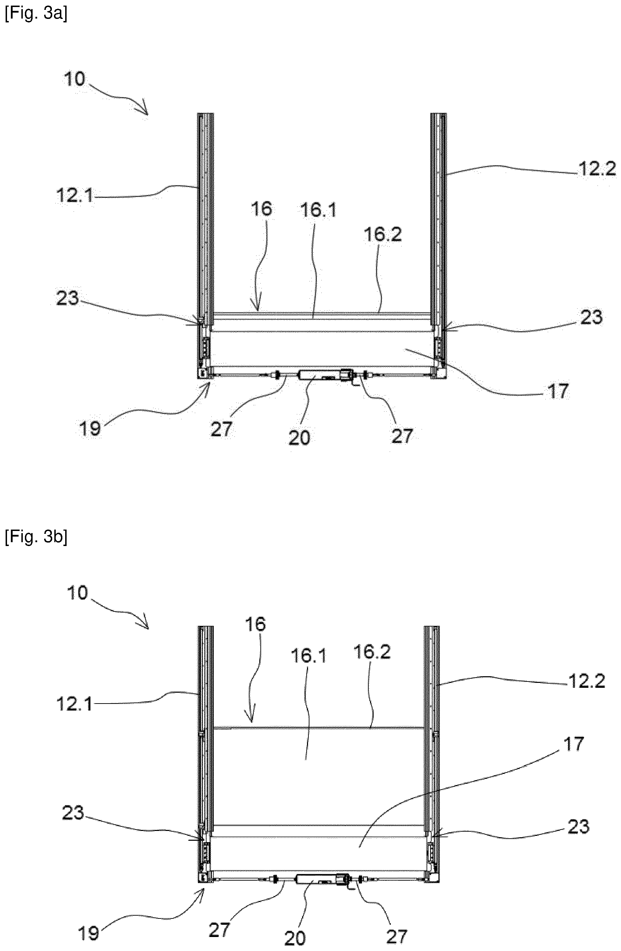

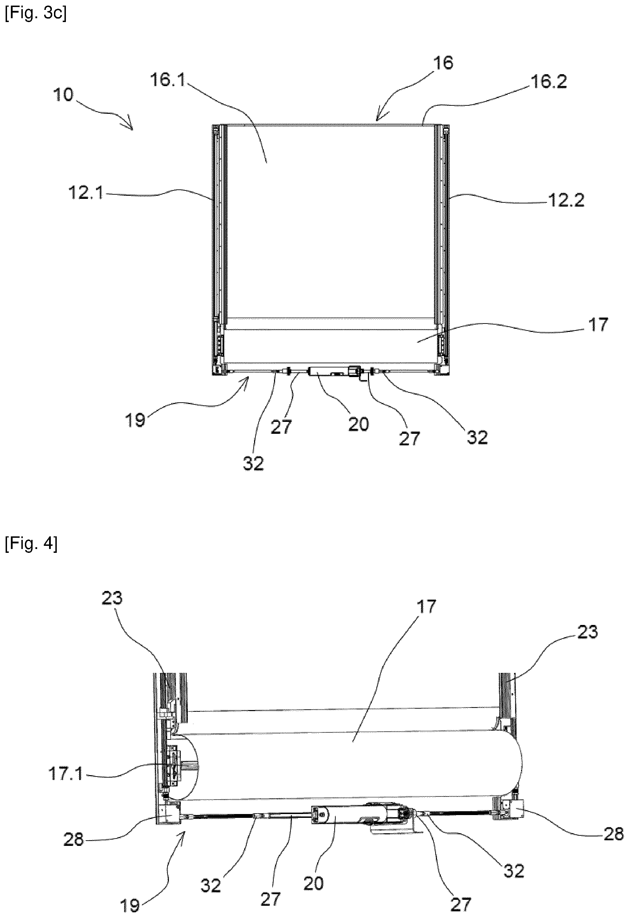

Comme on peut le voir sur la figure 2, un dispositif de guidage 19 muni d'un actionneur à moteur électrique 20 assure un guidage en translation du rideau 16.1 suivant une direction de déplacement D parallèle à une direction longitudinale d'un montant 12.1, 12.2 entre une position stockée dans laquelle le rideau flexible 16.1 est majoritairement enroulé autour du rouleau 17 de façon à libérer l'espace, tel que montré sur la figure 3a, et une position déployée dans laquelle le rideau flexible 16.1 est majoritairement déroulé par rapport au rouleau 17 de façon à fermer l'espace, tel que montré sur la figure 3c. Le rideau 16.1 pourra également prendre des positions intermédiaires, tel que montré sur la figure 3b.

Une extrémité de la barre transversale 16.2 est apte à coulisser à l'intérieur d'une rainure 21.1, 21.2 ménagée dans un montant 12.1, 12.2 correspondant lors du déplacement du rideau 16.1 d'une position à une autre, tel que montré sur la figure 1. Les bords du rideau 16.1 coulissent également à l'intérieur des rainures 21.1, 21.2 ménagées dans les montants 12.1, 12.2. A cet effet, les bords du rideau 16.1 traversent les rainures 21.1, 21.2 pour assurer un guidage vertical du rideau 16.1.

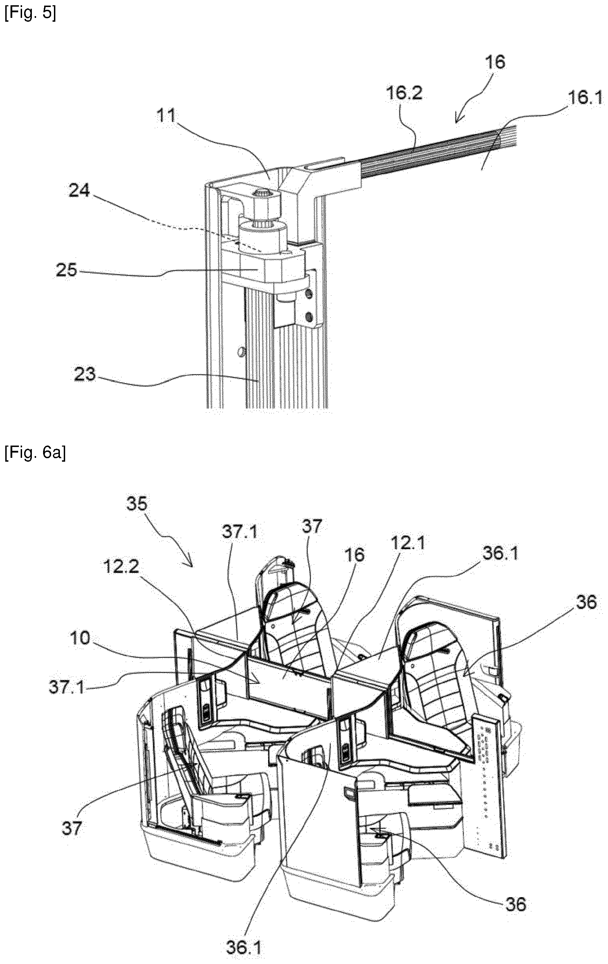

Comme on peut le voir sur les figures 4 et 5, le dispositif de guidage 19 comporte une vis sans fin 23 apte à être entraînée en rotation par rapport au bâti 11 par l'actionneur 20.

La vis sans fin 23 est disposée au moins en partie, de préférence complètement, à l'intérieur d'un logement 30.1, 30.2 délimité par un montant 12.1, 12.2 correspondant, tel que montré sur la figure 1. A cet effet, un montant 12.1, 12.2 pourra être constitué par de la tôle pliée de façon à former un logement 30.1, 30.2 correspondant. En variante, un montant 12.1, 12.2 pourra être constitué de plusieurs parois indépendantes assemblées entre elles par vissage ou mécano-soudage.

La vis sans fin 23 coopère via une liaison hélicoïdale 24 avec un dispositif de liaison 25 solidaire de l'ensemble à rideau 16.1, tel que montré sur la figure 5. Le dispositif de liaison 25 peut être fixé au rideau 16.1 ou à la barre transversale 16.2. Le dispositif de liaison 25 est disposé à l'intérieur d'un logement d'un montant 12.1, 12.2 correspondant. Le dispositif de liaison 25 présente une section non circulaire ayant une forme complémentaire de celle du montant 12.1, 12.2 afin d'empêcher une rotation du dispositif de liaison 25 par rapport au montant 12.1, 12.2.

Ainsi, une rotation de la vis sans fin 23 entraîne uniquement un déplacement en translation du dispositif de liaison 25 le long de la vis sans fin 23. Le montant 12.1, 12.2 assure, via ses parois internes, le guidage du dispositif de liaison 25. Suivant le sens de rotation de la vis sans fin 23, le rideau 16.1 pourra ainsi être déplacé vers le haut ou vers le bas suivant la direction de déplacement D.

Avantageusement, comme cela est visible sur la figure 4, l'actionneur 20 comporte deux sorties d'arbre 27. Les sorties d'arbre 27 sont coaxiales et disposées à chaque extrémité de l'actionneur 20. Chaque sortie d'arbre 27 est reliée mécaniquement à un dispositif de renvoi d'angle 28 connecté à une vis sans fin 23. Le dispositif de renvoi d'angle 28 est un dispositif standard à engrenages. Ainsi, l'actionneur 20 et ses sorties d'arbre 27 peuvent présenter une orientation horizontale, tandis que la vis sans fin 23 présente une orientation verticale. L'actionneur à moteur électrique 20 est de préférence disposé à l'intérieur du caisson 13.

En variante, l'actionneur 20 comporte une seule sortie d'arbre 27 reliée à un dispositif de renvoi d'angle 28. En variante, un actionneur électrique 20 est couplé à une extrémité inférieure ou supérieure de chaque vis sans fin 23, en ayant une sortie d'arbre 27 coaxiale avec la vis sans fin 23.

Avantageusement, une sortie d'arbre 27 de l'actionneur 20 est reliée mécaniquement au dispositif de renvoi d'angle 28 par l'intermédiaire d'une liaison 32 à au moins un degré de liberté en rotation, telle qu'une liaison rotule ou une liaison de type joint de cardan. Cela permet de compenser les défauts d'alignement entre la sortie de l'actionneur 20 et le dispositif de renvoi d'angle 28.

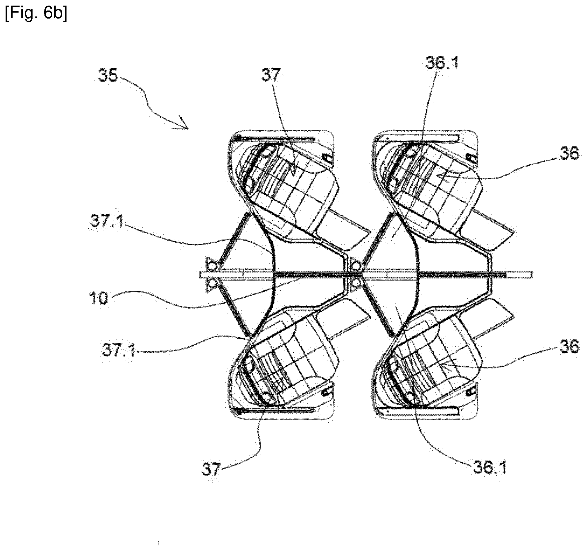

Les figures 6a et 6b montrent un dispositif de fermeture amovible 10 intégré dans un agencement de sièges d'avion 35 comportant deux sièges avant 36 associés chacun à une coque avant 36.1 et deux sièges arrière 37 associés chacun à une coque arrière 37.1.

Un dispositif de fermeture amovible 10 est disposé entre un siège avant 36 et un siège arrière 37. A cet effet, le premier montant 12.1 est fixé sur la coque avant 36.1 d'un siège avant 36 via son interface de fixation 15.1; tandis que le deuxième montant 12.2 est fixé sur la coque arrière 37.1 d'un siège arrière 37 via son interface de fixation 15.2. A cet effet, une interface de fixation 15.1, 15.2 d'un montant 12.1, 12.2 comporte des trous de passage d'organes de fixation, tels que des vis, des rivets, ou des goujons, ou autres organes adaptés à l'application, traversant également des trous réalisés dans la coque 36.1, 37.1 correspondante.

Lors d'une phase de montage, on commence par fixer un montant 12.1, 12.2 du dispositif de fermeture 10 sur une des coques, par exemple la coque arrière 37.1, puis l'autre coque, par exemple la coque avant 36.1, est fixée sur l'autre montant 12.1, 12.2 du dispositif de fermeture 10.

L'invention permet ainsi, grâce à l'intégration du dispositif de fermeture 10, de pouvoir aisément isoler les deux sièges arrière 37 disposés côte à côte, ou au contraire de permettre la communication entre les deux sièges arrière 37 lorsque le rideau 16.1 est en position stockée.

L'invention présente également l'avantage d'être aisément intégrable dans la cabine d'avion et de pouvoir être facilement dégagée du passage en cas d'accident du fait du caractère flexible du rideau 16.1.

Bien évidemment, l'invention n'est pas limitée aux modes de réalisation décrits précédemment et fournis uniquement à titre d'exemple. Elle englobe diverses modifications, formes alternatives et autres variantes que pourra envisager l'homme du métier dans le cadre des revendications attachées.

## Revendications

1. Dispositif de fermeture amovible (10) d'un espace à l'intérieur d'un avion, comportant:
- un bâti (11) comportant au moins une interface de fixation (15.1, 15.2) avec un élément structurel,
- un ensemble à rideau (16) comportant un rideau flexible (16.1),
- un rouleau (17) autour duquel peut s'enrouler le rideau flexible (16.1), où ledit bâti (11) comporte au moins un montant (12.1, 12.2), ledit montant (12.1, 12.2) comportant l'interface de fixation (15.1, 15.2),
- au moins un dispositif de guidage (19) comportant un actionneur à moteur électrique (20), ledit dispositif de guidage (19) étant apte à assurer un guidage en translation du rideau flexible (16.1) par rapport au montant (12.1, 12.2), de telle façon que le rideau flexible (16.1) peut être déplacé suivant une direction de déplacement (D) parallèle à une direction longitudinale du montant (12.1, 12.2) entre une position stockée dans laquelle le rideau flexible (16.1) est majoritairement enroulé autour du rouleau (17) et une position déployée dans laquelle le rideau flexible (16.1) est majoritairement déroulé par rapport au rouleau (17).

2. Dispositif de fermeture amovible selon la revendication 1, où le dispositif de guidage (19) comporte une vis sans fin (23) apte à être entraînée par l'actionneur à moteur électrique (20).

3. Dispositif de fermeture amovible selon la revendication 2, où la vis sans fin (23) coopère via une liaison hélicoïdale (24) avec un dispositif de liaison (25) solidaire de l'ensemble à rideau (16.1), de sorte qu'une rotation de la vis sans fin (23) entraîne un déplacement en translation du rideau flexible (16.1) suivant la direction de déplacement (D).

4. Dispositif de fermeture amovible selon la revendication 2 ou 3, où l'actionneur à moteur électrique (20) comporte au moins une sortie d'arbre (27) reliée mécaniquement à un dispositif de renvoi d'angle (28) connecté à la vis sans fin (23).

5. Dispositif de fermeture amovible selon la revendication 2 ou 3, où l'actionneur à moteur électrique (20) comporte deux sorties d'arbre (27), chaque sortie d'arbre (27) étant reliée mécaniquement à un dispositif de renvoi d'angle (28) connecté à une vis sans fin (23).

6. Dispositif de fermeture amovible selon la revendication 4 ou 5, où une sortie d'arbre (27) de l'actionneur à moteur électrique (20) est reliée mécaniquement au dispositif de renvoi d'angle (28) par l'intermédiaire d'une liaison (32) à au moins un degré de liberté en rotation, telle qu'une liaison rotule ou une liaison de type joint de cardan.

7. Dispositif de fermeture amovible selon la revendication 2, où le montant (12.1, 12.2) délimite un logement (30.1, 30.2) dans lequel est disposée au moins en partie, de préférence complètement, la vis sans fin (23).

8. Dispositif de fermeture amovible selon l'une quelconque des revendications 1 à 7, où le bâti (11) est muni d'un premier montant (12.1) et d'un deuxième montant (12.2) reliés entre eux par un caisson (13).

9. Dispositif de fermeture amovible selon la revendication 8, où le rouleau (17) est disposé au moins en partie à l'intérieur du caisson (13).

10. Dispositif de fermeture amovible selon la revendication 8 ou 9, où l'actionneur à moteur électrique (20) est disposé à l'intérieur du caisson (13).

11. Dispositif de fermeture amovible selon l'une quelconque des revendications 1 à 10, où l'ensemble à rideau (16) comporte une barre transversale (16.2) rigide fixée à une extrémité du rideau flexible (16.1).

12. Dispositif de fermeture amovible selon l'une quelconque des revendications 1 à 11, où une extrémité de la barre transversale (16.2) est apte à coulisser à l'intérieur d'une rainure (21.1, 21.2) ménagée dans le montant (12.1, 12.2).

13. Agencement de sièges d'avion (35) comportant:
- un siège avant (36) associé à une coque avant (36.1) et un siège arrière (37) associé à une coque arrière (37.1), et
- un dispositif de fermeture amovible (10) tel que défini selon l'une quelconque des revendications précédentes disposé entre le siège avant (36) et le siège arrière (37).

14. Agencement de sièges selon la revendication 13, où le dispositif de fermeture amovible (10) comporte un bâti (11) ayant un premier montant (12.1) muni d'une interface de fixation (15.1) pour assurer une fixation entre le premier montant (12.1) et la coque avant (36.1) du siège avant (36) et un deuxième montant (12.2) muni d'une interface de fixation (15.2) pour assurer une fixation entre le deuxième montant (12.2) et la coque arrière (37.1) du siège arrière (37).

15. Avion comportant un agencement de sièges tel que défini selon la revendication 13 ou 14.

## Patentansprüche

1. Abnehmbare Verschlussvorrichtung (10) für einen Raum innerhalb eines Flugzeugs, umfassend:
- einen Rahmen (11) mit mindestens einer Befestigungsschnittstelle (15.1, 15.2) für ein Strukturelement,
- eine Vorhanganordnung (16) mit einem flexiblen Vorhang (16.1) ,
- eine Rolle (17), um die der flexible Vorhang (16.1) gewickelt werden kann, wobei der Rahmen (11) mindestens eine Strebe (12.1, 12.2) umfasst, wobei die Strebe (12.1, 12.2) die Befestigungsschnittstelle (15.1, 15.2) umfasst,
- mindestens eine Führungsvorrichtung (19) mit einem elektromotorischen Aktuator (20), wobei die Führungsvorrichtung (19) in der Lage ist, den flexiblen Vorhang (16.1) relativ zu der Strebe (12.1, 12.2) translatorisch zu führen, so dass der flexible Vorhang (16.1) entlang einer Bewegungsrichtung (D) parallel zu einer Längsrichtung der Strebe (12.1, 12.2) zwischen einer eingelagerte auposition, in der der flexible Vorhang (16.1) hauptsächlich um die Rolle (17) gewickelt ist, und einer entfaltete Position, in der der flexible Vorhang (16.1) relativ zur Rolle (17) hauptsächlich abgerollt ist, bewegt werden kann.

2. Abnehmbare Verschlussvorrichtung nach Anspruch 1, **dadurch gekennzeichnet, dass** die Führungsvorrichtung (19) eine von dem elektromotorischen Aktuator (20) antreibbare Schnecke (23) umfasst.

3. Abnehmbare Verschlussvorrichtung nach Anspruch 2, wobei die Schnecke (23) über eine Spiralverbindung (24) mit einer mit der Vorhanganordnung (16.1) einstückigen Verbindungsvorrichtung (25) zusammenwirkt, so dass eine Drehung der Schnecke (23) eine Translationsbewegung des flexiblen Vorhangs (16.1) in Bewegungsrichtung (D) bewirkt.

4. Abnehmbare Verschlussvorrichtung nach Anspruch 2 oder 3, wobei der elektromotorische Aktuator (20) mindestens einen Wellenausgang (27) umfasst, der mechanisch mit einer mit der Schnecke (23) verbundenen Winkelgetriebevorrichtung (28) verbunden ist.

5. Abnehmbare Verschlussvorrichtung nach Anspruch 2 oder 3, **dadurch gekennzeichnet, dass** der elektromotorische Aktuator (20) zwei Wellenausgänge (27) aufweist, wobei jeder Wellenausgang (27) mit einer mit einer Schnecke (23) verbundenen Winkelgetriebevorrichtung (28) mechanisch verbunden ist.

6. Abnehmbare Verschlussvorrichtung nach Anspruch 4 oder 5, wobei ein Wellenausgang (27) des elektromotorischen Aktuators (20) mit der Winkelgetriebevorrichtung (28) über eine Verbindung (32) mit mindestens einem Rotationsfreiheitsgrad, wie eine Kugelgelenkverbindung oder eine Universalgelenkverbindung, mechanisch verbunden ist.

7. Abnehmbare Verschlussvorrichtung nach einem der Ansprüche 2 bis 6, **dadurch gekennzeichnet, dass** die Strebe (12.1, 12.2) ein Gehäuse (30.1, 30.2) begrenzt, in dem die Schnecke (23) zumindest teilweise, vorzugsweise vollständig, angeordnet ist.

8. Abnehmbare Verschlussvorrichtung nach einem der Ansprüche 1 bis 7, wobei der Rahmen (11) mit einer ersten Strebe (12.1) und einer zweiten Strebe (12.2) versehen ist, die durch einen Kasten (13) miteinander verbunden sind.

9. Abnehmbare Verschlussvorrichtung nach Anspruch 8, **dadurch gekennzeichnet, dass** die Rolle (17) zumindest teilweise innerhalb des Kastens (13) angeordnet ist.

10. Abnehmbare Verschlussvorrichtung nach Anspruch 8 oder 9, wobei der elektromotorische Aktuator (20) innerhalb des Kastens (13) angeordnet ist.

11. Abnehmbare Verschlussvorrichtung nach einem der Ansprüche 1 bis 10, wobei die Vorhanganordnung (16) eine starre Querstange (16.2) umfasst, die an einem Ende des flexiblen Vorhangs (16.1) angebracht ist.

12. Abnehmbare Verschlussvorrichtung nach einem der Ansprüche 1 bis 11, wobei ein Ende der Querstange (16.2) in einer Nut (21.1, 21.2) in der Strebe (12.1, 12.2) gleiten kann.

13. Flugzeugsitzanordnung (35) mit:
- einem Vordersitz (36), der einer Vorderschale (36.1) zugeordnet ist, und einem Rücksitz (37), der einer Hinterschale (37.1) zugeordnet ist, und
- einer abnehmbaren Verschlussvorrichtung (10) nach einem der vorhergehenden Ansprüche, die zwischen dem Vordersitz (36) und dem Rücksitz (37) angeordnet ist.

14. Sitzanordnung nach Anspruch 13, wobei die abnehmbare Verschlussvorrichtung (10) einen Rahmen (11) umfasst, der eine erste Strebe (12.1) mit einer Befestigungsschnittstelle (15.1) für eine Fixierung zwischen der ersten Strebe (12.1) und der Vorderschale (36.1) des Vordersitzes (36) und eine zweite Strebe (12.2) mit einer Befestigungsschnittstelle (15.2) für eine Fixierung zwischen der zweiten Strebe (12.2) und der Rückschale (37.1) des Rücksitzes (37) aufweist.

15. Flugzeug mit einer Sitzanordnung nach Anspruch 13 oder 14.

## Claims

1. A removable closure device (10) for a space inside an aircraft, comprising:
- a frame (11) including at least one fixing interface (15.1, 15.2) for a structural element,
- a curtain assembly (16) including a flexible curtain (16.1) ,
- a roller (17) around which the flexible curtain (16.1) can be wound, wherein said frame (11) includes at least one strut (12.1, 12.2), said strut (12.1, 12.2) including the fixing interface (15.1, 15.2),
- at least one guiding device (19) including an electric motor actuator (20), said guiding device (19) being able to guide in translation the flexible curtain (16.1) relative to the strut (12.1, 12.2), such that the flexible curtain (16.1) can be moved along a direction of movement (D) parallel to a longitudinal direction of the strut (12.1, 12.2) between a stored position in which the flexible curtain (16.1) is mainly wound around the roller (17) and a deployed position in which the flexible curtain (16.1) is mainly unrolled relative to the roller (17).

2. The removable closure device according to claim 1, wherein the guiding device (19) includes a worm (23) able to be driven by the electric motor actuator (20).

3. The removable closure device according to claim 2, wherein the worm (23) cooperates via a helical connection (24) with a connection device (25) fixed to the curtain assembly (16.1), so that a rotation of the worm (23) causes a translational movement of the flexible curtain (16.1) in the direction of movement (D).

4. The removable closure device according to claim 2 or 3, wherein the electric motor actuator (20) includes at least one shaft output (27) mechanically connected to a bevel gear device (28) connected to the worm (23).

5. The removable closure device according to claim 2 or 3, wherein the electric motor actuator (20) has two shaft outputs (27), each shaft output (27) being mechanically connected to a bevel gear device (28) connected to a worm (23) .

6. The removable closure device according to claim 4 or 5, wherein a shaft output (27) of the electric motor actuator (20) is mechanically connected to the bevel gear device (28) via a connection (32) with at least one degree of freedom in rotation, such as a ball joint or a connection of universal joint type.

7. The removable closure device according to claim 2, wherein the strut (12.1, 12.2) defines a housing (30.1, 30.2) in which the worm (23) is at least partially, preferably completely, arranged.

8. The removable closure device according to any one of the claims 1 to 7, wherein the frame (11) is provided with a first strut (12.1) and a second strut (12.2) interconnected to one another by a box (13).

9. The removable closure device according to claim 8, wherein the roller (17) is arranged at least partly inside the box (13).

10. The removable closure device according to claim 8 or 9, wherein the electric motor actuator (20) is arranged inside the box (13).

11. The removable closure device according to any one of the claims 1 to 10, wherein the curtain assembly (16) includes a rigid crossbar (16.2) attached to one end of the flexible curtain (16.1).

12. The removable closure device according to any one of the claims 1 to 11, in which one end of the crossbar (16.2) is able to slide inside a groove (21.1, 21.2) in the strut (12.1, 12.2).

13. An aircraft seat arrangement (35) including:
- a front seat (36) associated with a front shell (36.1) and a rear seat (37) associated with a rear shell (37.1), and
- a removable closure device (10) as defined according to any one of the preceding claims, arranged between the front seat (36) and the rear seat (37).

14. The seat arrangement according to claim 13, wherein the removable closure device (10) includes a frame (11) having a first strut (12.1) provided with a fixing interface (15.1) for a fixation between the first strut (12.1) and the front shell (36.1) of the front seat (36) and a second strut (12.2) provided with a fixing interface (15.2) for a fixation between the second strut (12.2) and the rear shell (37.1) of the rear seat (37).

15. An aircraft including a seat arrangement as defined in claim 13 or 14.
